# FASCICULE DE BREVET EUROPEEN

(11) **EP 4 622 874 B1**
(45) Date de publication et mention de la délivrance du brevet: **21.10.2026**
(21) Numéro de dépôt: 23783469.2
(22) Date de dépôt: 25.08.2023
(51) Int. Cl.: B64D 37/04, B64D 37/08, B64D 37/18, F02C 7/236

(54) **SYSTÈME DE CARBURANT POUR UN AVION COMPRENANT UN DISPOSITIF DE BRASSAGE DE CARBURANT**
KRAFTSTOFFSYSTEM FÜR EIN FLUGZEUG MIT EINER KRAFTSTOFFMISCHVORRICHTUNG
FUEL SYSTEM FOR AN AIRCRAFT COMPRISING A FUEL MIXING DEVICE

(30) Priorité: 22.11.2022 FR 2212138
(43) Date de publication de la demande: 01.10.2025
(73) Titulaire: Safran Aerosystems, 78370 Plaisir (FR)
(72) Inventeur: VOZY, Thibaut, 77550 MOISSY-CRAMAYEL (FR)
(74) Mandataire: Cabinet Camus Lebkiri
(86) Numéro de dépôt international: PCT/FR2023/051293
(87) Numéro de publication internationale: WO 2024/110705

(56) Documents cités:
- CN-A- 114 954 966
- CN-A- 115 123 560
- CN-U- 218 703 931
- RU-C1- 2 028 969

## Description

### DOMAINE TECHNIQUE DE L'INVENTION

Le domaine technique de l'invention est celui des systèmes de carburant aéronautique, en particulier les systèmes de carburant dans un avion.

La présente invention concerne, plus particulièrement, un dispositif de brassage apte à permettre un brassage des réserves de carburant situées dans un avion, notamment dans un collecteur d'un avion.

### ARRIERE-PLAN TECHNOLOGIQUE DE L'INVENTION

Pour des raisons de sécurité, les avions transportent toujours une quantité supplémentaire non négligeable de carburant par rapport au carburant nécessaire pour effectuer leur vol. Une telle quantité supplémentaire leur permet, notamment, de faire face à des imprévus. Ainsi, même en fin de vol, les réservoirs des avions ne sont pas entièrement vides. Sur un avion de ligne monocouloir, par exemple de type A320, une telle réserve représente environ une tonne de carburant.

Avant d'effectuer un nouveau vol, les réservoirs des avions sont à nouveau remplis avec une quantité de carburant calculée par le pilote. Le contrôle de la quantité de carburant présente dans les réservoirs est réalisé par un système de jaugeage.

Le déposant a cependant identifié que la quantité de carburant indiquée par le système de jaugeage ne correspond pas toujours à la quantité réelle de carburant présente dans les réservoirs. Ainsi, dans le cas où la quantité réelle de carburant a été surévaluée, cela se traduit par un non-respect de la quantité de carburant supplémentaire et donc par un risque pour la sécurité. Dans le cas où la quantité réelle de carburant a été sous-évaluée, cela se traduit par un surpoids inutile.

Un but de l'invention consiste donc à trouver l'origine d'une telle erreur et à la corriger. La solution de l'invention doit avantageusement être fiable, durable, économique et facile à mettre en œuvre. Préférentiellement, elle doit pouvoir être adaptée à tout type d'avion existant, à moindre coût, tout en nécessitant une modification minimale des avions.

On notera que le document RU 2028969 C1 divulgue un système d'alimentation en carburant comprenant un réservoir auxiliaire monté au-dessus du réservoir principal et un dispositif de limitation du remplissage monté à la sortie de la conduite reliée à la conduite de remplissage du réservoir principal.

De même, le document CN 115123560 A divulgue un réservoir de carburant prévu pour garantir que le réservoir de surcharge est toujours dans un état de plein de carburant pendant le processus de remplissage, contrôle le coût de production et le poids structurel, améliore le taux d'utilisation du carburant, et garantit que le réservoir de carburant obtient une capacité anti-surcharge négative à long terme et en fin de voyage.

En outre, le document CN 114954966 A divulgue un système d'alimentation en carburant et de transfert de carburant dans lequel le carburant peut être transféré du réservoir de carburant central vers les réservoirs de carburant situés sur les deux ailes, et dans lequel les réservoirs de carburant des deux ailes sont équipés de réservoirs de collecte de carburant et de tuyaux pour transférer le carburant du reste des réservoirs de carburant des deux ailes vers les réservoirs de collecte de carburant.

### RESUME DE L'INVENTION

A la suite de nombreuses études, le déposant a apprécié que l'erreur du système de jaugeage provient du caractère non homogène du carburant présent dans les réservoirs.

En effet, à la fin d'un vol, le carburant de réserve est à une température très froide, tandis que le carburant avec lequel les réservoirs sont remplis à l'aéroport est à température ambiante. Il en résulte donc une importante différence de température entre les deux carburants.

De plus, les deux carburants peuvent également être de natures différentes, car provenant, par exemple, de raffineries différentes, et présenter ainsi des différences significatives dans leur composition, leur densité et/ou leur permittivité électrique.

Le déposant a donc caractérisé que l'erreur concernant la quantité réelle de carburant restante provient du fait que le système de jaugeage considère que le carburant présent dans les réservoirs de l'avion est homogène, alors qu'il ne l'est pas.

Le manque d'homogénéité du carburant dans les réservoirs lors de leur remplissage a plusieurs origines. La principale est dû au fait que le remplissage, pour des raisons de sécurité, est réalisé avec une assez faible vitesse d'écoulement.

En effet, une faible vitesse de remplissage permet, notamment, d'éviter l'accumulation de charges électrostatiques dans le carburant. Toutefois, cela ne permet pas un mélange suffisant du carburant de réserve avec le nouveau carburant introduit dans les réservoirs lors du remplissage.

Le manque d'homogénéité du carburant est également dû au fait que les réservoirs d'un avion sont compartimentés. Les compartiments sont généralement équipés de longerons perforés, peu perméables, susceptibles de générer des retenues de liquide dans les parties basses des réservoirs, pouvant freiner considérablement l'écoulement du carburant.

Afin de pallier un tel problème, le déposant a développé une solution visant à effectuer un brassage du carburant de réserve avec le nouveau carburant introduit dans les réservoirs.

Un aspect de l'invention concerne un système de carburant pour un avion comprenant :
- au moins un réservoir d'aile comportant au moins un collecteur et un système de transfert, apte à alimenter le collecteur en carburant; et
- un système de remplissage, apte à introduire du carburant dans le système de carburant depuis une source externe de carburant, comprenant une prise de remplissage reliée au réservoir d'aile par au moins une ligne de remplissage principale.

De plus, le système de carburant comprend un dispositif de brassage, apte à brasser du carburant présent dans le collecteur et du carburant introduit au niveau de la prise de remplissage, notamment lors d'opération de remplissage ou de ravitaillement en carburant de l'avion.

Selon un aspect de l'invention, le dispositif de brassage comprend une conduite de brassage, apte à relier le système de transfert et le système de remplissage.

Par ailleurs, le système de remplissage peut comprendre une première ligne de remplissage reliant la ligne de remplissage principale au réservoir d'aile et reliée à la conduite de brassage, notamment au niveau d'un premier point de raccordement.

Selon un autre aspect de l'invention, la première ligne de remplissage comporte un restricteur, notamment situé en amont d'un orifice de remplissage débouchant dans le réservoir d'aile.

Selon un aspect supplémentaire de l'invention, la première ligne de remplissage comporte au moins une vanne de contrôle, notamment située en amont du restricteur.

En complément, la conduite de brassage est reliée entre la vanne de contrôle et le restricteur, notamment situé en aval du premier point de raccordement.

Selon un aspect de l'invention, le système de transfert comprend au moins une pompe reliée à un éjecteur au travers d'une ligne de transfert reliée à la conduite de brassage, notamment au niveau d'un deuxième point de raccordement.

Selon un aspect supplémentaire de l'invention, la ligne de transfert comporte au moins un clapet anti-retour agencé en sortie de la pompe.

Par ailleurs, le deuxième point de raccordement est situé entre le clapet anti-retour et l'éjecteur.

Selon un aspect de l'invention, le dispositif de brassage comprend un clapet anti-retour, en particulier un clapet à piston ou un clapet à battant, agencé sur la conduite de brassage autorisant un écoulement du carburant depuis le système de remplissage, notamment depuis la première ligne de remplissage, vers le système de transfert, notamment vers la ligne de transfert, et interdisant un écoulement du carburant depuis le système de transfert, notamment depuis la ligne de transfert, vers le système de remplissage, notamment vers la première ligne de remplissage.

En particulier, la conduite de brassage présente un diamètre interne compris entre 10 et 30 millimètres, préférentiellement compris entre 12 et 24 millimètres, et plus préférentiellement compris entre 15 et 20 millimètres.

Selon un autre aspect de l'invention, le système de carburant comprend une deuxième ligne de remplissage reliée à la ligne principale de remplissage et à la première ligne de remplissage au niveau d'un point d'intersection.

Un aspect de l'invention concerne également un avion comportant au moins une première aile et au moins une deuxième aile, dont la première aile et la deuxième aile sont équipées d'un système de carburant tel que décrit précédemment.

Le dispositif de brassage de l'invention permet avantageusement de réaliser un prémélange entre du carburant introduit depuis une source externe de carburant via la prise de remplissage et du carburant présent dans le réservoir d'aile grâce à un écoulement turbulent. Par la suite, le prémélange de carburant ainsi réalisé s'écoule dans le collecteur, ce qui permet de mélanger du carburant présent dans le collecteur avec du carburant prémélangé grâce aux turbulences de l'écoulement dans le collecteur. Il est ainsi possible d'homogénéiser les carburants présents et introduits dans le réservoir d'aile.

Le collecteur communiquant avec le réservoir d'aile par un dispositif d'évacuation, homogénéiser le carburant dans le collecteur permet également d'homogénéiser la totalité du carburant de réserve présent après un vol avec le carburant qui est introduit en vue du vol suivant.

Le dispositif de brassage de l'invention est peu onéreux, fiable, simple à fabriquer et facile à mettre en place.

Utilisant la pression déjà présente dans le système de remplissage, il ne consomme pas d'énergie supplémentaire. Prévu en amont du restricteur du système de remplissage, le dispositif de brassage de l'invention ne provoque pas de perte de charge susceptible de perturber le système de remplissage.

Enfin, il ne nécessite ni pompe, ni éjecteur supplémentaire, mais utilise des éléments déjà présents dans le système de transfert et dans le système de remplissage. Il permet ainsi de garantir la fiabilité des installations déjà en place et de limiter au minimum la masse supplémentaire pour l'avion.

### BREVE DESCRIPTION DES FIGURES

L'invention et ses différentes applications seront mieux comprises à la lecture de la description qui suit et à l'examen des figures qui l'accompagnent. Les figures sont présentées à titre indicatif et nullement limitatif de l'invention sur lesquelles :
[Fig. 1] La figure 1 est une vue schématique en perspective d'un avion dans lequel des réservoirs de carburants sont représentés en pointillés ;
[Fig. 2] La figure 2 est une vue schématique plane d'une aile droite d'un avion dans laquelle sont représentés un système d'alimentation des moteurs, un système de transfert et un système de remplissage selon l'art antérieur ; et
[Fig. 3] La figure 3 est une vue schématique plane de l'aile droite d'un avion équipée d'un dispositif de brassage selon l'invention.

### DESCRIPTION DETAILLEE

Sauf précision contraire, un même élément apparaissant sur des figures différentes présente une référence unique.

De manière classique, le terme « amont » désigne un élément se trouvant avant un point considéré par rapport à un sens d'écoulement du carburant. À l'opposé, le terme « aval » désigne un élément se trouvant après le point considéré par rapport au sens d'écoulement du carburant.

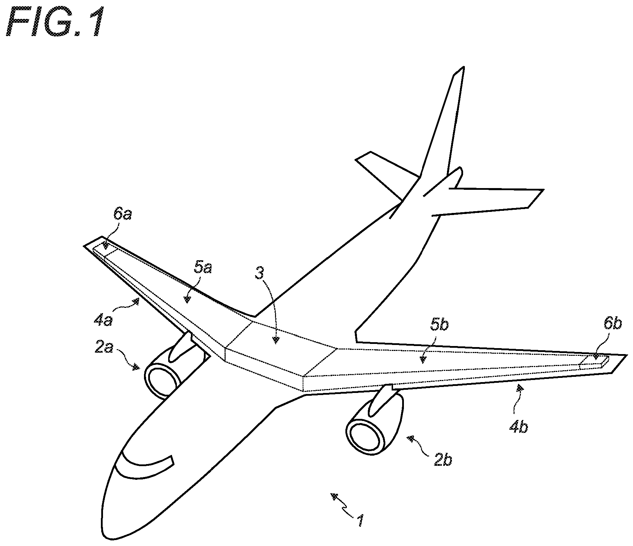

La figure 1 est une vue schématique en perspective d'un avion 1 comprenant au moins un moteur 2a, en particulier au moins un premier moteur 2a et un deuxième moteur 2b. Le moteur 2 est, par exemple, monté sur une aile 4a de l'avion 1, en particulier le premier moteur 2a est monté sur une première aile 4a de l'avion 1 et le deuxième moteur 2b est monté sur une deuxième aile 4b de l'avion 1. Spécifiquement, la première aile 4a est notamment une aile droite 4a de l'avion 1 et la deuxième aile 4b est notamment une aile gauche 4b de l'avion 1.

De plus, l'avion 1 peut comporter un réservoir central 3, situé en partie centrale de l'avion 1, notamment à une même hauteur que l'aile 4a, notamment à la même hauteur que la première aile 4a et la deuxième aile 4b de l'avion 1.

Par ailleurs, l'avion 1 peut comporter au moins un réservoir d'aile 5a, en particulier au moins un premier réservoir d'aile 5a et un deuxième réservoir d'aile 5b, notamment le premier réservoir d'aile 5a est disposé dans la première aile 4a de l'avion 1 et le deuxième réservoir d'aile 5b est disposé dans la deuxième aile 4b de l'avion 1.

Enfin, l'avion 1 est susceptible de comporter au moins un réservoir de débordement 6a, en particulier au moins un premier réservoir de débordement 6a et un deuxième réservoir de débordement 6b, notamment le premier réservoir de débordement 6a est disposé à une extrémité de la première aile 4a de l'avion 1 et le deuxième réservoir de débordement 6b est disposé à une extrémité de la deuxième aile 4b de l'avion 1.

Sur la figure1, le réservoir central 3, le premier réservoir d'aile 5a, le deuxième réservoir d'aile 5b, le premier réservoir de débordement 6a et le deuxième réservoir de débordement 6b sont schématiquement présentés en pointillés.

Au cours d'un vol, le réservoir central 3 est habituellement vidé en premier.

La pression située à l'intérieur du réservoir central 3 et du réservoir d'aile 5a, en particulier du premier réservoir d'aile 5a et du deuxième réservoir d'aile 5b, est habituellement équilibrée avec la pression extérieure par des lignes de ventilation.

Le réservoir de débordement 6a, en particulier le premier réservoir de débordement 6a et le deuxième réservoir de débordement 6b, également connu sous la dénomination anglaise « surge tank », a pour principal rôle de capturer le carburant apte à entrer dans les lignes de ventilation, notamment lors d'un trop plein.

En situation normale, le réservoir de débordement 6a, en particulier le premier réservoir de débordement 6a et le deuxième réservoir de débordement 6b, est vide.

Le réservoir d'aile 5a, en particulier le premier réservoir d'aile 5a et le deuxième réservoir d'aile 5b, est habituellement renforcé et compartimenté en caissons par des longerons perforés. Pour des raisons de simplification et de clarté des figures, de tels caissons, de tels longerons perforés ainsi que de nombreux autres éléments habituellement présents dans le réservoir d'aile 5a, en particulier dans le premier réservoir d'aile 5a et dans le deuxième réservoir d'aile 5b, ne sont pas représentés.

Le moteur 2a, en particulier le premier moteur 2a et le deuxième moteur 2b, est de n'importe quel type adapté aux avions, par exemple, un moteur thermique à pistons, un turbomoteur, un turbopropulseur ou un turboréacteur.

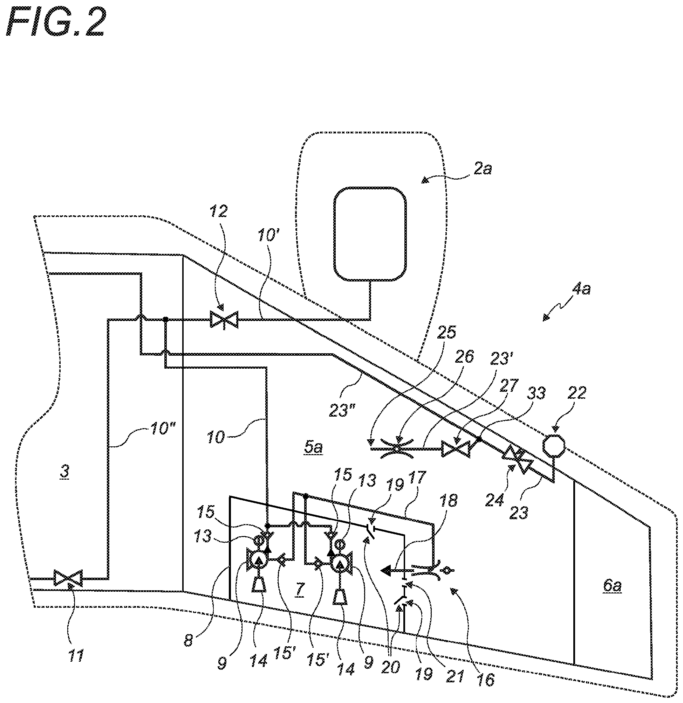

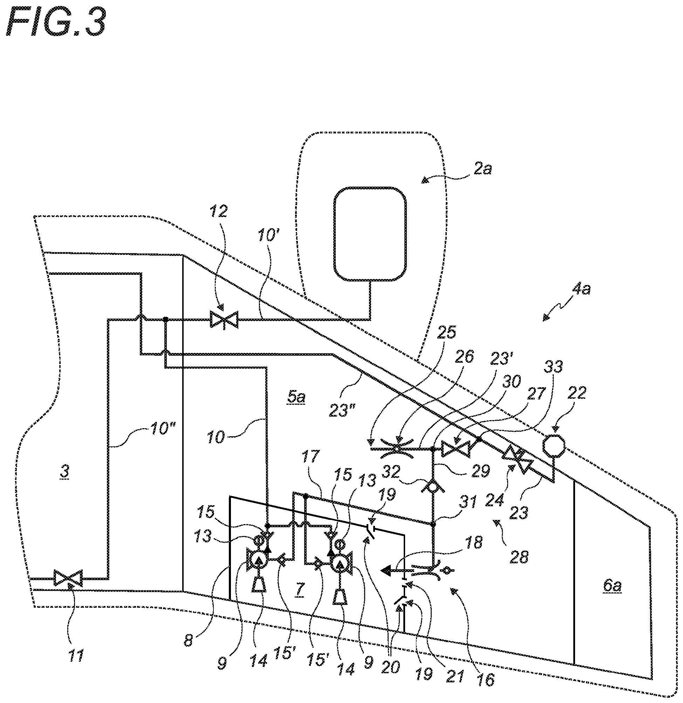

Afin de décrire plus en détail les éléments de l'avion 1 concernés par l'invention, seule la première aile 4a, ou aile droite 4a, a été représentée sur les figures 2 et 3, étant entendu que tous les éléments de l'aile droite 4a présents sur les figures 2 et 3 sont également présents au sein de l'aile gauche 4b.

Ainsi, la figure 2 est une vue schématique plane de l'aile droite 4a de l'avion 1 dans laquelle sont représentés un système d'alimentation du moteur 2a, en particulier du premier moteur 2a et du deuxième moteur 2b, un système de transfert et un système de remplissage selon l'art antérieur.

Le réservoir d'aile 5a est équipé d'au moins un collecteur 7, ou réservoir d'alimentation 7. En situation normale, le collecteur 7 est plein de carburant. De plus, le collecteur 7 est apte à contenir une partie des réserves de carburant, également dénommées carburant de réserve.

Le collecteur 7 comprend une enceinte 8 fermée. L'enceinte 8 renferme au moins une pompe 9, faisant partie intégrante du système d'alimentation du moteur 2a.

La pompe 9 est également désignée en tant que pompe de gavage 9. La pompe 9 est immergée et est apte à aspirer le carburant présent dans l'enceinte 8 du collecteur 7 afin de le refouler sous pression en direction du moteur 2a via une ligne d'alimentation primaire 10.

Les pompes 9 alimentent généralement les moteurs 2a, 2b avec du carburant sous une pression de 1,5 bars relatif.

Par ailleurs, la pompe 9 du collecteur 7 de l'aile droite 4a peut alimenter le premier moteur 2a monté sur l'aile droite 4a de l'avion 1, mais également, la pompe 9 du collecteur 7 de l'aile droite 4a est susceptible d'alimenter le deuxième moteurs 2b monté sur l'aile gauche 4b de l'avion 1, et vice-versa.

Ainsi, la ligne d'alimentation primaire 10 est susceptible d'alimenter une ligne d'alimentation droite 10', destinée à fournir le premier moteur 2a monté sur l'aile droite 4a de l'avion 1, et une ligne de transfert d'alimentation 10", destinée à fournir le deuxième moteur 2b monté sur l'aile gauche 4b de l'avion 1.

En particulier, la ligne de transfert d'alimentation 10" est équipée d'une vanne de communication 11. La vanne de communication 11 est fermée lorsque la ligne d'alimentation primaire 10 agencée dans l'aile droite 4a n'alimente pas le deuxième moteur 2b monté sur l'aile gauche 4b de l'avion 1 via la ligne de transfert d'alimentation 10".

Dans des modes particuliers de réalisation, la ligne d'alimentation primaire 10 peut également alimenter un système d'alimentation d'un groupe auxiliaire de puissance, qui ne sera pas détaillé ici.

De même, selon d'autres modes particuliers de réalisation, la pompe 9 peut également être utilisée lors d'opération de vidange au sein d'un système de largage et/ou de vidange de carburant.

Pour des raisons de sécurité, la ligne d'alimentation droite 10' comprend une vanne coupe-feu 12, par exemple prévue entre la pompe 9 et le moteur 2a. La vanne coupe-feu 12 permet notamment d'éviter qu'un feu éventuel au niveau du moteur 2a ne se propage au travers de la ligne d'alimentation primaire 10, de la ligne d'alimentation droite 10' et de la ligne de transfert d'alimentation 10".

La vanne coupe-feu 12 est préférentiellement prévue au plus près du moteur 2a, sur la ligne d'alimentation droite 10' et/ou sur la ligne de transfert d'alimentation 10" du moteur 2a, en particulier le premier moteur 2a et le deuxième moteur 2b.

Les moyens essentiels de l'avion 1 étant habituellement doublés ou triplés pour des raisons de sécurité, le collecteur 7 comprend préférentiellement au moins deux pompes 9.

La pompe 9 est préférentiellement équipée d'un pressostat 13, apte à permettre une vérification du bon fonctionnement de la pompe 9. La pompe 9 est également reliée à une crépine 14, destinée à être prévue en point bas du collecteur 7, notamment pour permettre une aspiration du carburant.

De plus, un clapet anti-retour 15 peut également être prévu à la sortie de la pompe 9 en amont des lignes d'alimentation droite 10' et de la ligne de transfert d'alimentation 10". Le clapet anti-retour 15 autorise un écoulement du carburant depuis la pompe 9 vers le moteur 2a, en particulier vers le premier moteur 2a et vers le deuxième moteur 2b, mais interdit un écoulement du carburant depuis le moteur 2a, en particulier depuis le premier moteur 2a et le deuxième moteur 2b, vers la pompe 9.

Afin de s'assurer que, en fonctionnement, le moteur 2a soit toujours alimenté en carburant, notamment quelle que soit l'inclinaison de l'avion 1 ou les turbulences subies par l'avion 1, le collecteur 7 doit toujours être plein.

Dans ce but, le collecteur 7 est alimenté en permanence en carburant par un système de transfert. Le collecteur 7 constitue ainsi une réserve de carburant apte à contenir du carburant de réserve, en particulier facile à pomper.

Le système de transfert, alimentant le collecteur 7 en permanence en carburant, comprend un éjecteur 16 agencé dans le réservoir d'aile 5a. L'éjecteur 16 est également connu sous la dénomination anglaise « *jet pump* »*.*

Une petite quantité de carburant présente dans l'enceinte 8 du collecteur 7 est aspirée par la pompe 9 et est envoyée, sous pression, à travers l'éjecteur 16 au travers d'une ligne de transfert 17.

Par exemple, l'éjecteur 16 comprend une chambre d'aspiration qui, lorsqu'elle est traversée par le carburant sous pression provenant de la pompe 9, aspire, par effet venturi, le carburant présent dans le réservoir d'aile 5a et l'éjecte dans l'enceinte 8 du collecteur 7 au travers d'une sortie d'éjecteur 18. La quantité de carburant aspirée par effet venturi dans le réservoir d'aile 5a est amplement supérieure à la quantité de carburant aspirée par la pompe 9 dans l'enceinte 8 du collecteur 7.

Par ailleurs, un clapet anti-retour 15' peut être également prévu à la sortie de la pompe 9, sur la ligne de transfert 17, en amont de l'éjecteur 1. Le clapet anti-retour 15' autorise un écoulement du carburant depuis la pompe 9 vers l'éjecteur 16, mais interdit un écoulement du carburant depuis l'éjecteur 16 vers la pompe 9.

Afin de permettre une alimentation en carburant de l'enceinte 8 du collecteur 7, notamment en cas de panne de la pompe 9 et/ou de défaillance de l'éjecteur 16, l'enceinte 8 peut présenter au moins une ouverture 19 située en point bas communiquant avec le réservoir d'aile 5a. L'ouverture 19 est avantageusement équipée d'un clapet anti-retour 20, en particulier un clapet à battant 20. Le clapet anti-retour 20 permet un écoulement du carburant par gravité depuis le réservoir d'aile 5a vers l'enceinte 8 du collecteur 7. Le clapet anti-retour 20 équipant l'ouverture 19 autorise un débit très faible de carburant, par exemple de l'ordre de cinq litres par heure.

Le moteur 2a peut alors être alimenté en carburant à partir de l'enceinte 8 du collecteur 7 en aspirant eux-mêmes le carburant nécessaire à leur fonctionnement.

Lorsque l'enceinte 8 du collecteur 7 est remplie, un dispositif d'évacuation 21, ou dispositif trop-plein 21, permet de retourner le surplus de carburant vers le réservoir d'aile 5a. En particulier, le surplus de carburant est également apte à remplir les différents réservoirs de l'avion 1 avec lesquels il communique, notamment le réservoir central 3.

L'avion 1 est également équipé d'au moins un système de remplissage sous pression.

Selon un mode de réalisation, le réservoir central 3, le premier réservoir d'aile 5a disposé dans la première aile 4a et le deuxième réservoir d'aile 5b disposé dans la deuxième aile 4b sont remplis de carburant lors d'une opération de remplissage. Pour ce faire, la première aile 4a est équipée d'au moins une prise de remplissage 22.

En particulier, l'opération de remplissage peut être effectuée d'un seul côté de l'avion 1. Alternativement, il est possible que l'opération de remplissage puisse être effectuée des deux côtés de l'avion 1.

La prise de remplissage 22 est prévue pour être raccordée à une source externe de carburant, habituellement un camion-citerne. Au niveau d'une prise de remplissage 22, la source externe de carburant fournit du carburant au réservoir d'aile 5a, en particulier le premier réservoir d'aile 5a et le deuxième réservoir d'aile 5b, notamment à une pression d'environ 2,8 bars.

Le système de remplissage comprend la prise de remplissage 22 et au moins une ligne de remplissage principale 23 reliant la prise de remplissage 22 au réservoir d'aile 5a, en particulier le premier réservoir d'aile 5a et le deuxième réservoir d'aile 5b.

Par ailleurs, le système de remplissage peut comprendre une première ligne de remplissage 23' prévue pour remplir le réservoir d'aile 5a présent dans l'aile droite 4a, notamment située du côté de la prise de remplissage 22. En complément ou alternativement, le système de remplissage peut comprendre une deuxième ligne de remplissage 23" prévue pour remplir le deuxième réservoir d'aile 5b présent dans l'aile gauche 4b, par exemple opposée à la prise de remplissage 22.

La ligne de remplissage principale 23 réalise une liaison entre la prise de remplissage 22 et la première de remplissage 23' et/ou la deuxième ligne de remplissage 23".

Selon un mode particulier de réalisation, une vanne de coupure 24 peut être prévue sur la ligne de remplissage principale 23.

En entrée du réservoir d'aile 5a, notamment du premier réservoir d'aile 5a respectivement du deuxième réservoir d'aile 5b, la première ligne de remplissage 23', respectivement la deuxième ligne de remplissage 23", comporte d'un orifice de remplissage 25, notamment destinée à déboucher dans le réservoir d'aile 5a.

L'orifice de remplissage 25 peut comprendre un restricteur 26, destiné à limiter un débit de remplissage. Une telle limitation du débit de remplissage permet d'éviter notamment une accumulation de charges électrostatiques dans le carburant. De plus, elle permet également d'équilibrer le débit de remplissage entre la première ligne de remplissage 23' et la deuxième ligne de remplissage 23". L'équilibrage de débit de remplissage permet de remplir le premier réservoir d'aile 5a et le deuxième réservoir d'aile 5b simultanément, sensiblement avec le même débit.

Entre le restricteur 26 et la prise de remplissage 22, la première ligne de remplissage 23' est équipée d'une vanne de contrôle 27. La vanne de contrôle 27 permet de couper la première ligne de remplissage 23' lorsque le réservoir d'aile 5a a atteint un niveau de remplissage en carburant souhaité. Un tel niveau de remplissage est mesuré par un système de jaugeage non représenté.

On se reporte dorénavant à la figure 3 qui est une vue schématique plane de l'aile droite 4a de l'avion 1 équipée d'un dispositif de brassage 28 selon l'invention.

L'invention se particularise par le dispositif de brassage 28, apte à assurer un brasage du carburant de réserve avec du carburant introduit dans les réservoirs de l'avion, en particulier le réservoir central 3, le premier réservoir d'aile 5a et le deuxième réservoir d'aile 5b, lors de l'opération de remplissage.

Préférentiellement, l'avion 1 équipé de l'invention est équipé de deux dispositifs de brassage 28, respectivement disposés dans l'aile droite 4a et dans l'aile gauche 4b.

Au niveau de l'aile 4a, le dispositif de brassage 28 comprend une conduite de brassage 29, apte à raccorder la première ligne de remplissage 23', prévue pour remplir le réservoir d'aile 5a présent dans l'aile droite 4a, à la ligne de transfert 17, notamment au niveau d'un premier point de raccordement 30 situé sur la première ligne de remplissage 23' et d'un deuxième point de raccordement 31 situé sur la ligne de transfert 17.

Sur la première ligne de remplissage 23' reliant la prise de remplissage 22 à l'orifice de remplissage 25 afin de remplir le réservoir d'aile 5a présent dans l'aile droite 4a, le premier point de raccordement 30 est préférentiellement situé entre la prise de remplissage 22 et le restricteur 26. Plus préférentiellement, le premier point de raccordement 30 est situé entre la vanne de contrôle 27 et le restricteur 26.

Sur la ligne de transfert 17 reliant la pompe 9 à l'éjecteur 16, le deuxième point de raccordement 31 est préférentiellement situé entre la pompe 9 et l'éjecteur 16. Plus préférentiellement, le deuxième point de raccordement 31 est situé entre le clapet anti-retour 15', prévu à la sortie de la pompe 9, et l'éjecteur 16.

Selon un mode spécifique de réalisation, la conduite de brassage 29 est équipée d'un clapet anti-retour 32. Le clapet anti-retour 32 peut être un clapet à piston ou un clapet à battant. Le clapet anti-retour 32 autorise un écoulement du carburant depuis le système de remplissage, notamment depuis la première ligne de remplissage 23', vers le système de transfert, notamment vers la ligne de transfert 17, en particulier depuis la prise de remplissage 22 vers l'éjecteur 16, mais interdit un écoulement du carburant depuis le système de transfert, notamment depuis la ligne de transfert 17, vers le système de remplissage, notamment vers la première ligne de remplissage 23'.

La conduite de brassage 29 forme ainsi un pontage entre le système de remplissage et le système de transfert.

Une telle conduite de brassage 29 peut facilement être installée au sein d'un avion existant. Dans le cas où un fabriquant souhaiterait proposer la mise en place en option d'un dispositif de brassage 28 selon l'invention, il peut par conséquent prévoir le premier point de raccordement 30 sur la première ligne de remplissage 23' et le deuxième point de raccordement 31 situé sur la ligne de transfert 17.

Le premier point de raccordement 30 et le deuxième point de raccordement 31 peuvent, par exemple, être équipés de moyens de connexion aptes à pouvoir connecter la conduite de brassage 29 selon l'invention amovible entre le premier point de raccordement 30 et le deuxième point de raccordement 31. De tels moyens de connexion, s'ils ne sont pas utilisés, sont, par exemple, fermés par des bouchons.

Comme évoqué précédemment, lors de l'opération de remplissage des réservoirs de l'avion 1, tels que le réservoir central 3, le premier réservoir d'aile 5a et le deuxième réservoir d'aile 5b, l'enceinte 8 du collecteur 7 comprend, en situation normale, du carburant, notamment en étant pleine de carburant.

Si l'enceinte 8 du collecteur 7 ne comprenait pas de carburant, cela signifierait généralement que l'avion 1 a consommé la totalité ou pratiquement la totalité du carburant et que, par conséquent, le problème lié au manque d'homogénéité du carburant lors de l'opération de remplissage ne se pose pas.

Lors de l'opération de remplissage des réservoirs de l'avion 1, du carburant est introduit sous pression au niveau de la prise de remplissage 22. Le carburant introduit au niveau de la prise de remplissage 22 s'écoule alors au travers de la ligne de remplissage principale 23, en particulier traversant la vanne de coupure 24 si elle est présente.

Le carburant introduit rencontre ensuite un point d'intersection 33 prévu entre la première ligne de remplissage 23' et la deuxième ligne de remplissage 23".

A partir du point d'intersection 33, le carburant se divise en deux flux pour alimenter respectivement la première ligne de remplissage 23' et la deuxième ligne de remplissage 23".

Le flux de carburant circulant dans la première ligne de remplissage 23', respectivement dans la deuxième ligne de remplissage 23", traverse alors la vanne de contrôle 27 et parvient au premier point de raccordement 30.

A partir du premier point de raccordement 30, le flux de carburant se divise de nouveau en deux pour,
- d'une part, notamment en traversant le restricteur 26, remplir le réservoir d'aile 5a, en particulier le premier réservoir d'aile 5a et le deuxième réservoir d'aile 5b, au niveau de l'orifice de remplissage 25, et
- d'autre part, pénétrer dans la conduite de brassage 29.

Le carburant circulant dans la conduite de brassage 29, après avoir traversé le clapet anti-retour 32, atteint le deuxième point de raccordement 31 situé sur la ligne de transfert 17.

Au niveau du deuxième point de raccordement 31, le flux de carburant ne peut pas s'écouler en direction de la pompe 9 en raison du clapet anti-retour 15' prévu à la sortie de la pompe 9. Le flux de carburant s'écoule donc vers l'éjecteur 16, pour pénétrer ensuite dans l'enceinte 8 du collecteur 7 au niveau de la sortie d'éjecteur 18.

Le flux de carburant est par exemple fourni au collecteur 7 à une pression d'environ 3 bars, supérieure à la pression à laquelle la pompe 9 fournit du carburant à l'éjecteur 16.

Le flux de carburant fourni au collecteur 7 résulte d'un mélange comprenant du carburant issu de l'opération de remplissage, au carburant neuf introduit au niveau de la prise de remplissage 22, et du carburant provenant du réservoir d'aile 5a. Par exemple, le flux de carburant fourni au collecteur 7 peut contenir un tiers de carburant neuf et deux tiers de carburant provenant du réservoir d'aile 5a. Ainsi, au niveau de la sortie d'éjecteur 18, le carburant est prémélangé.

Le flux de carburant fourni au collecteur 7 est sous pression et génère des turbulences dans le carburant présent dans l'enceinte 8 du collecteur 7. De telles turbulences permettant de brasser le carburant présent dans l'enceinte 8 du collecteur 7 pour le mélanger et donc de l'homogénéiser. Une telle étape d'homogénéisation par des turbulences est ici appelée « brassage ».

Alors que le carburant présent dans l'enceinte 8 du collecteur 7 est homogénéisé par brassage avec le carburant introduit au niveau de la prise de remplissage 22, un mélange de carburant homogénéisé est apte à ressortir de l'enceinte 8 du collecteur 7 au travers du dispositif d'évacuation 21 pour remplir le réservoir d'aile 5a, en particulier le premier réservoir d'aile 5a et le deuxième réservoir d'aile 5b.

A la fin du ravitaillement, c'est-à-dire que l'opération de remplissage est terminée, le réservoir d'aile 5a, en particulier le premier réservoir d'aile 5a et le deuxième réservoir d'aile 5b, de l'avion 1 contient un carburant homogène. De plus, la quantité de carburant indiquée par le système de jaugeage correspond à la quantité réelle de carburant présente dans le réservoir d'aile 5a, en particulier le premier réservoir d'aile 5a et le deuxième réservoir d'aile 5b.

Selon un mode de réalisation, le carburant introduit au niveau de la prise de remplissage 22 de la première aile 4a, peut également circuler dans la deuxième ligne de remplissage 23" pour circuler dans la première ligne de remplissage 23' agencée dans la deuxième aile 4b et effectuer un brassage des carburants dans la deuxième réservoir d'aile 5b selon le même principe, avec des moyens identiques.

Afin de limiter les pertes de charge dans le dispositif de brassage 28, la conduite de brassage 29 qui raccorde la première ligne de remplissage 23' à la ligne de transfert 17 est idéalement prévue pour être la plus courte possible, selon un trajet le plus direct possible.

La conduite de brassage 29 peut présenter un diamètre interne similaire à celui d'une conduite constituant la ligne de transfert 17. La conduite de brassage 29 peut présenter notamment un diamètre interne compris entre 10 et 30 millimètres, préférentiellement compris entre 12 et 24 millimètres, avantageusement compris entre 15 et 20 millimètres.

## Revendications

1. Système de carburant pour un avion (1), ledit système comprenant :
- au moins un réservoir d'aile (5a, 5b) comportant au moins un collecteur (7) et un système de transfert, apte à alimenter le collecteur (7) en carburant; et
- un système de remplissage, apte à introduire du carburant dans le système de carburant depuis une source externe de carburant, comprenant une prise de remplissage (22) reliée au réservoir d'aile (5a, 5b) par au moins une ligne de remplissage principale (23) ;
**caractérisé en ce qu'**il comprend un dispositif de brassage (28), apte à brasser du carburant présent dans le collecteur (7) et du carburant introduit au niveau de la prise de remplissage (22).

2. Système de carburant selon la revendication 1, **caractérisé en ce que** le dispositif de brassage (28) comprend une conduite de brassage (29), apte à relier le système de transfert et le système de remplissage.

3. Système de carburant selon la revendication 2, **caractérisé en ce que** le système de remplissage comprend une première ligne de remplissage (23') reliant la ligne de remplissage principale (23) au réservoir d'aile (5a, 5b) et reliée à la conduite de brassage (29), notamment au niveau d'un premier point de raccordement (30).

4. Système de carburant selon la revendication 3, **caractérisé en ce que** la première ligne de remplissage (23') comporte un restricteur (26), notamment situé en amont d'un orifice de remplissage (25) débouchant dans le réservoir d'aile (5a, 5b).

5. Système de carburant selon la revendication 3 ou 4, **caractérisé en ce que** la première ligne de remplissage (23') comporte au moins une vanne de contrôle (27), notamment située en amont du restricteur (26).

6. Système de carburant selon la revendication 5, **caractérisé en ce que** la conduite de brassage (29) est reliée entre la vanne de contrôle (27) et le restricteur (26), notamment situé en aval du premier point de raccordement (30).

7. Système de carburant selon l'une quelconque des revendications 2 à 6, **caractérisé en ce que** le système de transfert comprend :
- un éjecteur (16),
- une ligne de transfert (17) reliée à la conduite de brassage (29), notamment au niveau d'un deuxième point de raccordement (31), et
- au moins une pompe (9) reliée à l'éjecteur (16) au travers de la ligne de transfert (17).

8. Système de carburant selon la revendication 7, **caractérisé en ce que** la ligne de transfert (17) comporte au moins un clapet anti-retour (15') agencé en sortie de la pompe (9).

9. Système de carburant selon la revendication 8, **caractérisé en ce que** le deuxième point de raccordement (31) est situé entre le clapet anti-retour (15') et l'éjecteur (16).

10. Système de carburant selon l'une quelconque des revendications 2 à 9, **caractérisé en ce que** le dispositif de brassage (28) comprend un clapet anti-retour (32), en particulier un clapet à piston ou un clapet à battant, agencé sur la conduite de brassage (29) autorisant un écoulement du carburant depuis le système de remplissage, vers le système de transfert, et interdisant un écoulement du carburant depuis le système de transfert, vers le système de remplissage, notamment vers la première ligne de remplissage (23').

11. Système de carburant selon l'une quelconque des revendications 3 à 10, **caractérisé en ce qu'**il comprend une deuxième ligne de remplissage (23") reliée à la ligne de remplissage principale (23) et à la première ligne de remplissage (23') au niveau d'un point d'intersection (33).

12. Avion (1) comportant au moins une première aile (4a) et au moins une deuxième aile (4b), **caractérisé en ce que** la première aile (4a) et la deuxième aile (4b) sont équipées d'un système de carburant selon l'une quelconque des revendications précédentes.

## Patentansprüche

1. Treibstoffsystem für ein Flugzeug (1), wobei dieses System umfasst:
- mindestens einen Flügeltank (5a, 5b), der mindestens einen Verteiler (7) und ein Fördersystem aufweist, das dazu ausgelegt ist, den Verteiler (7) mit Treibstoff zu versorgen; und
- ein Befüllsystem, das dazu ausgelegt ist, Treibstoff aus einer externen Treibstoffquelle in das Treibstoffsystem einzuleiten, und das einen Einfüllstutzen (22) umfasst, der über mindestens eine Hauptbefüllleitung (23) mit dem Flügeltank (5a, 5b) verbunden ist;
**dadurch gekennzeichnet, dass** es eine Umwälzvorrichtung (28) umfasst, die dazu ausgelegt ist, im Verteiler (7) vorhandenen Treibstoff und am Einfüllstutzen (22) eingeleiteten Kraftstoff zu vermischen.

2. Treibstoffsystem nach Anspruch 1, **dadurch gekennzeichnet, dass** die Umwälzvorrichtung (28) eine Umwälzleitung (29) umfasst, die das Fördersystem und das Befüllsystem verbinden kann.

3. Treibstoffsystem nach Anspruch 2, **dadurch gekennzeichnet, dass** das Befüllsystem eine erste Befüllleitung (23') umfasst, die die Hauptbefüllleitung (23) mit dem Flügeltank (5a, 5b) verbindet und mit der Umwälzleitung (29) verbunden ist, insbesondere an einer ersten Anschlussstelle (30).

4. Treibstoffsystem nach Anspruch 3, **dadurch gekennzeichnet, dass** die erste Befüllleitung (23') eine Drossel (26) aufweist, die insbesondere stromaufwärts einer in den Flügeltank (5a, 5b) mündenden Einfüllöffnung (25) angeordnet ist.

5. Treibstoffsystem nach Anspruch 3 oder 4, **dadurch gekennzeichnet, dass** die erste Befüllleitung (23') mindestens ein Steuerventil (27) aufweist, das insbesondere stromaufwärts der Drossel (26) angeordnet ist.

6. Treibstoffsystem nach Anspruch 5, **dadurch gekennzeichnet, dass** die Umwälzleitung (29) zwischen dem Steuerventil (27) und der Drossel (26) angeschlossen ist, die insbesondere stromabwärts des ersten Anschlusspunkts (30) angeordnet ist.

7. Treibstoffsystem nach einem der Ansprüche 2 bis 6, **dadurch gekennzeichnet, dass** das Fördersystem umfasst:
- einen Ejektor (16),
- eine Förderleitung (17), die mit der Umwälzleitung (29) verbunden ist, insbesondere an einem zweiten Anschlusspunkt (31), und
- mindestens eine Pumpe (9), die über die Förderleitung (17) mit dem Ejektor (16) verbunden ist.

8. Treibstoffsystem nach Anspruch 7, **dadurch gekennzeichnet, dass** die Förderleitung (17) mindestens ein Rückschlagventil (15') aufweist, das am Ausgang der Pumpe (9) angeordnet ist.

9. Treibstoffsystem nach Anspruch 8, **dadurch gekennzeichnet, dass** sich der zweite Anschlusspunkt (31) zwischen dem Rückschlagventil (15') und dem Ejektor (16) befindet.

10. Treibstoffsystem nach einem der Ansprüche 2 bis 9, **dadurch gekennzeichnet, dass** die Umwälzvorrichtung (28) ein Rückschlagventil (32), insbesondere ein Kolbenventil oder ein Klappenventil, umfasst, das in der Umwälzleitung (29) angeordnet ist und einen Treibstofffluss vom Befüllsystem zum Fördersystem zulässt, während es einen Treibstofffluss vom Fördersystem zum Befüllsystem, insbesondere zur ersten Befüllleitung (23'), verhindert.

11. Treibstoffsystem nach einem der Ansprüche 3 bis 10, **dadurch gekennzeichnet, dass** es eine zweite Befüllleitung (23") umfasst, die an einem Schnittpunkt (33) mit der Hauptfüllleitung (23) und der ersten Befüllleitung (23') verbunden ist.

12. Flugzeug (1) mit mindestens einem ersten Flügel (4a) und mindestens einem zweiten Flügel (4b), **dadurch gekennzeichnet, dass** der erste Flügel (4a) und der zweite Flügel (4b) mit einem Treibstoffsystem gemäß einem der vorstehenden Ansprüche ausgestattet sind.

## Claims

1. Fuel system for an aeroplane (1), said system comprising:
- at least one wing tank (5a, 5b) including at least one manifold (7) and a transfer system, able to supply the manifold (7) with fuel; and
- a filling system, able to introduce fuel into the fuel system from an external fuel source, comprising a filling neck (22) connected to the wing tank (5a, 5b) by at least one main filling line (23);
**characterised in that** it comprises a stirring device (28), able to stir fuel present in the manifold (7) and fuel introduced at the filling neck (22).

2. Fuel system according to claim 1, **characterised in that** the stirring device (28) comprises a stirring duct (29), able to connect the transfer system and the filling system.

3. Fuel system according to claim 2, **characterised in that** the filling system comprises a first filling line (23') connecting the main filling line (23) to the wing tank (5a, 5b) and connected to the stirring duct (29), especially at a first connecting point (30).

4. Fuel system according to claim 3, **characterised in that** the first filling line (23') includes a restrictor (26), especially located upstream of a filling port (25) opening into the wing tank (5a, 5b).

5. Fuel system according to claim 3 or 4, **characterised in that** the first filling line (23') includes at least one control valve (27), especially located upstream of the restrictor (26).

6. Fuel system according to claim 5, **characterised in that** the stirring duct (29) is connected between the control valve (27) and the restrictor (26), especially located downstream of the first connecting point (30).

7. Fuel system according to any of claims 2 to 6, **characterised in that** the transfer system comprises:
- a jet pump (16),
- a transfer line (17) connected to the stirring duct (29), especially at a second connecting point (31), and
- at least one pump (9) connected to the jet pump (16) via the transfer line (17).

8. Fuel system according to claim 7, **characterised in that** the transfer line (17) includes at least one non-return valve (15') arranged at the outlet of the pump (9).

9. Fuel system according to claim 8, **characterised in that** the second connecting point (31) is located between the non-return valve (15') and the jet pump (16).

10. Fuel system according to any of claims 2 to 9, **characterised in that** the stirring device (28) comprises a non-return valve (32), in particular a piston valve or a flapper type valve, arranged on the stirring duct (29) allowing fuel flow from the filling system to the transfer system and prohibiting fuel flow from the transfer system to the filling system, especially to the first filling line (23').

11. Fuel l system according to any of claims 3 to 10, **characterised in that** it comprises a second filling line (23") connected to the main filling line (23) and to the first filling line (23') at an intersection point (33).

12. Aeroplane (1) including at least one first wing (4a) and at least one second wing (4b), **characterised in that** the first wing (4a) and the second wing (4b) are equipped with a fuel system according to any of the preceding claims.
